# EUROPEAN PATENT APPLICATION

(11) **EP 4 618 259 A1**
(43) Date of publication of application: **17.09.2025**
(21) Application number: 23921849.8
(22) Date of filing: 16.02.2023
(51) Int. Cl.: H01M 50/102

(54) **BATTERY CELL, BATTERY, ELECTRIC DEVICE, AND METHOD FOR PREPARING BATTERY CELL**

(71) Applicant: Contemporary Amperex Technology (Hong Kong) Limited, Hong Kong (HK)
(72) Inventor: XU, Liangfan, Ningde, Fujian 352100 (CN); ZHOU, Wenlin, Ningde, Fujian 352100 (CN); LI, Xing, Ningde, Fujian 352100 (CN); JIN, Haizu, Ningde, Fujian 352100 (CN)
(74) Representative: Gong, Jinping
(86) International application number: PCT/CN2023/076468
(87) International publication number: WO 2024/168692

(57) **Abstract**

Provided in the present application are a battery cell, a battery, an electric device, and a method for preparing a battery cell. The battery cell comprises: a housing having an opening; an end cap assembly for closing the opening; an electrode assembly accommodated inside the housing; and a receiving component accommodated inside the housing, the receiving component being used for accommodating the electrode assembly and an electrolyte. **In** the technical solution of the present application, the receiving component is arranged inside the housing, and the electrolyte and the electrode assembly are both stored in the receiving component, so that the receiving component can isolate the electrolyte from the housing and the end cap assembly to a certain extent, and the receiving component plays a certain role in secondary sealing of the electrolyte. Therefore, the risk of the electrolyte corroding the housing and the end cap assembly can be reduced, and the risk of the performance of the battery being affected due to failure of connection between the housing and the end cap assembly and leakage of the electrolyte at the connection between the housing and the end cap assembly can be reduced, thereby improving the reliability of the performance of the battery.

## Description

### Technical Field

The present disclosure relates to the field of battery technology, in particular to a battery cell, a battery, an electrical equipment and a preparation method for battery cell.

### Background Art

Energy conservation and emission reduction are key to the sustainable development of the automotive industry, and electric vehicles have become an important component of the sustainable development of the automotive industry due to their advantages in energy conservation and environmental protection. For electric vehicles, battery technology is an important factor related to their development.

In battery technology, how to improve the reliability of batteries is an urgent problem to be solved.

### Summary

The embodiments of the present disclosure provide a battery cell, a battery, an electrical equipment and a preparation method for battery cell, which can improve the reliability of the battery.

In the first aspect, the present disclosure provides a battery cell comprising: a casing having an opening; an end cover assembly, covering the opening; an electrode assembly, housed within the casing; and an accommodating component, housed within the casing, wherein the accommodating component is configured to accommodate the electrode assembly and electrolyte.

In the technical solution of the present disclosure, the accommodating component is provided inside the casing, and the electrolyte and electrode assembly are accommodated together in the accommodating component. The accommodating component can isolate the electrolyte from the casing and end cover assembly to a certain extent, and play a certain secondary sealing role for the electrolyte, thereby reducing the risk of electrolyte corrosion for the casing and end cover assembly, and reducing the risk of battery performance being affected by the failure of the connection between the casing and end cover assembly and electrolyte leakage from the connection between the casing and end cover assembly, thereby improving the reliability of battery performance.

According to some embodiments of the present disclosure, the end cover assembly comprises an electrode terminal, the accommodating component is provided with a first through hole, and the electrode assembly comprises an electrical energy lead-out member, wherein the electrical energy lead-out member is located inside the accommodating component, and the area of the electrical energy lead-out member corresponding to the first through hole forms a first exposed area, and the first exposed area is connected to the electrode terminal.

In the above technical solution, the accommodating component is provided with a first through hole, which facilitates the interconnection between the electrode terminals of the end cover assembly and the electrode assembly, thereby meeting the requirement of interconnection between the electrical energy lead-out member and the electrode terminals. At the same time, the first through hole provided on the accommodating component is relatively small, thereby allowing only a part of the electrical energy lead-out member to be exposed and then connected to the electrode terminal, thereby improving the sealing and isolation effectiveness of the accommodating component, minimizing the risk of electrolyte leakage from the accommodating component, and further improving the reliability of the battery performance.

According to some embodiments of the present disclosure, the electrical energy lead-out member seals the first through hole.

In the above technical solution, the electrical energy lead-out member directly blocks the first through hole to further reduce the risk of electrolyte leaked out of the accommodating component from the gap between the electrical energy lead-out member and the first through hole, improve the encapsulation effect of the electrolyte by the accommodating component, and thus further enhance the reliability of the battery.

According to some embodiments of the present disclosure, the first exposed area has a protrusion that passes through the first through hole and is connected to the electrode terminal.

In the above technical solution, a protrusion passing through the first through hole is formed at the position of the first exposed area, and this protrusion can limit the relative position of the accommodating component and the electrical energy lead-out member during the assembly of the battery cell, thereby facilitating grouping. The protrusion extends out of the accommodating component from the first through hole of the accommodating component, thereby facilitating the connection between the electrode terminal and the electrical energy lead-out member. In addition, the protrusion penetrates into the first through hole, which can play a role in blocking the first through hole or reducing the gap between the electrical energy lead-out member and the first through hole to some extent, thereby further reducing the risk of electrolyte leakage through the first through hole and improving the reliability of the battery.

According to some embodiments of the present disclosure, the electrode assembly comprises a main body part and a tab, wherein the tab protrudes from the main body part and forms the electrical energy lead-out member.

In the above technical solution, the tab of the electrode assembly can be directly extended to the position of the first through hole of the accommodating component, so that the tab covers the first through hole and has a first exposed area exposed through the first through hole, and the first exposed area of the tab is directly connected to the electrode terminal.

According to some embodiments of the present disclosure, the electrode assembly further comprises a main body part and a tab, wherein the tab protrudes from the main body part, and the electrical energy lead-out member is connected to the tab to achieve electrical connection between the tab and the electrode terminal.

In the above technical solution, the electrical energy lead-out member is connected to the tab and the electrode terminal, thereby achieving electrical connection between the electrode terminal and the electrode assembly.

According to some embodiments of the present disclosure, the electrical energy lead-out member is fixedly connected to the accommodating component.

In the above technical solution, the electrical energy lead-out member is fixedly connected to the accommodating component, and the relative position between the electrical energy lead-out member and the accommodating component is fixed, thereby reducing the risk of offset of the accommodating component or the electrical energy lead-out member, improving the fixing of the relative position of the first exposed area, and improving the stability of the connection between the electrical energy lead-out member and the electrode terminal, which is also conducive to improving the reliability of the battery performance.

According to some embodiments of the present disclosure, the electrical energy lead-out member and the accommodating component are connected to form a connecting area, wherein the connecting area is an annular structure surrounding the outer periphery of the first through hole.

In the above technical solution, the connecting area between the electrical energy lead-out member and the accommodating component forms the annular structure, which is located on the outer periphery of the first through hole. The connecting area not only fixes the relative position of the electrical energy lead-out member and the accommodating component, but also seals the electrical energy lead-out member to the accommodating component. The connecting area can prevent electrolyte from entering the first through hole through the gap between the electrical energy lead-out member and the accommodating component and leaking out of the accommodating component from the first through hole, thereby further improving the sealing of the accommodating component and facilitating further improvement of the reliability of the battery performance.

According to some embodiments of the present disclosure, the electrical energy lead-out member and the accommodating component are bonded by an adhesive layer.

In the above technical solution, the electrical energy lead-out member and the accommodating component are bonded through an adhesive layer, which has a simple process, and few material limitations, and is convenient for the assembly operation of battery cells.

According to some embodiments of the present disclosure, the end cover assembly comprises an end cover and the electrode terminal, wherein the end cover closes the opening, and the electrode terminal is disposed on the end cover; and the accommodating component comprises a first wall located between the end cover and the electrode assembly along a thickness direction of the end cover, and the first through hole is provided on the first wall.

In the above technical solution, the first through hole of the accommodating component is located on the first wall facing the end cover of the accommodating component, which can minimize the connection distance between the electrode terminal and the electrical energy lead-out member, facilitate the assembly operation of the battery cell, and save the internal space of the casing, which is conducive to improving the energy density of the battery cell.

According to some embodiments of the present disclosure, the end cover assembly comprises two electrode terminals, and both the electrical energy lead-out members and the first through holes are provided in a number of two, wherein the electrical energy lead-out members and the first through holes correspond one-to-one with the electrode terminals.

In the above technical solution, two first through holes are provided on the accommodating component, and the two first through holes correspond one-to-one with the two electrical energy lead-out members of the battery cell, which can prevent the problem of the opening being too large due to the need to reserve clearance space when one first through hole is compatible with the connection of two electrical energy lead-out members, thereby reducing the risk of the first through hole opening being too large and affecting the encapsulation effect of the accommodating component on the electrolyte, thereby reducing the risk of electrolyte leakage and improving the reliability of the battery performance.

According to some embodiments of the present disclosure, the end cover assembly comprises an electrode terminal, and the electrode assembly comprises a main body part and an electrical energy lead-out member, wherein the main body part is located inside the accommodating component, and the electrical energy lead-out member is located outside the accommodating component and connected to the electrode terminal, wherein the accommodating component is provided with a first through hole, and the electrical energy lead-out member covers the first through hole; the electrical energy lead-out member forms a second exposed area at an area corresponding to the first through hole, and the second exposed area is connected to the main body part to achieve electrical connection between the main body part and the electrode terminal.

In the above technical solution, the electrical energy lead-out member can be placed outside the accommodating component, and the main body of the electrode assembly and the electrical energy lead-out member can be directly or indirectly connected to each other through the first through hole. The electrical energy lead-out member is located outside the accommodating component to facilitate the connection operation between the electrical energy lead-out member and the electrode terminal.

According to some embodiments of the present disclosure, the material of the accommodating component is an insulating material.

In the above technical solution, the material of the accommodating component is the insulating material. When the casing is made of metal material, the accommodating component can play a role in insulation and isolation, which is also conducive to improving the reliability of the battery.

According to some embodiments of the present disclosure, the material of the accommodating component comprises at least one of polypropylene and polyethylene terephthalate.

In the above technical solution, the material of the accommodating component includes at least one of polypropylene and polyethylene terephthalate, which are mature and structurally stable. The accommodating component made of the above materials has good deformation performance, which is easy to assemble battery cells, and has good tensile strength, which can more reliably contain electrolyte and improve the performance reliability of the battery; and in the event of thermal runaway of the battery cell, the accommodating components can be damaged at high temperatures, which facilitates the smooth release of pressure from the battery cell and also improves the reliability of the battery performance.

According to some embodiments of the present disclosure, the end cover assembly is provided with a liquid injection hole, wherein the liquid injection hole is communicated with the interior of the accommodating component.

In the above technical solution, the end cover assembly is equipped with a liquid injection hole, which facilitates the injection of electrolyte into the accommodating component through the liquid injection hole.

According to some embodiments of the present disclosure, the end cover assembly comprises an end cover and an electrode terminal, wherein the end cover closes the opening, the electrode terminal is disposed on the end cover, the electrode terminal is electrically connected to the electrode assembly, and the liquid injection hole is disposed on the electrode terminal.

In the above technical solution, the liquid injection hole is integrated into the electrode terminal, which can reduce the number of openings in the end cover itself. At the same time, the electrode terminal is connected to the electrode assembly, and the electrolyte in the liquid injection hole can enter the accommodating component through the connection position between the electrode terminal and the electrolytic assembly. Compared with the structure of separately making holes on the accommodating component to communicate the liquid injection hole with the accommodating component, it can reduce the destructive processing for the accommodating component, improve the isolation effect of the accommodating component, and thus enhance the reliability of the battery.

According to some embodiments of the present disclosure, the accommodating component is provided with a first through hole, and the electrode assembly comprises an electrical energy lead-out member, wherein the electrical energy lead-out member is located inside the accommodating component, and the area of the electrical energy lead-out member corresponding to the first through hole forms a first exposed area, and the first exposed area is connected to the electrode terminal; and the first exposed area is provided with a second through hole, wherein the second through hole communicates the liquid injection hole and the interior of the accommodating component.

In the above technical solution, the electrical energy lead-out member has a first exposed area exposed from the first through hole of the accommodating component, and the electrode terminal is connected to the first exposed area. At the same time, a second through hole is provided on the first exposed area, and the liquid injection hole inside the electrode terminal is communicated with the second through hole, which can make the liquid injection hole communicate with the interior of the accommodating component. Its structural conformability is higher, and arranging one through hole in the accommodating component can meet the two requirements of the interconnection between the electrode assembly and the electrode terminal, and the internal communication between the liquid injection hole and the accommodating component. It meets the functional requirements of the battery cell while minimizing destructive processing on the accommodating component, thereby improving the integrity and sealing of the accommodating component, reducing the risk of electrolyte leakage from the accommodating component, and thus reducing the risk of electrolyte leakage from battery cell and improving the reliability of battery cells.

According to some embodiments of the present disclosure, the liquid injection hole is positioned opposite to the second through hole along the thickness direction of the end cover.

In the above technical solution, there is an overlapping area between the liquid injection hole and the second through hole along the thickness direction of the end cover. The electrolyte flowing out from the liquid injection hole can directly enter the second through hole, thereby shortening the liquid injection path as much as possible and reducing the risk of leakage during the electrolyte being injected into the accommodating component. This is also beneficial for improving the reliability of the battery cell.

According to some embodiments of the present disclosure, the electrode terminal is welded to the first exposed area to form a welding area, wherein the welding area is an annular structure surrounding the outer periphery of the liquid injection hole.

In the above technical solution, the electrode terminal is welded to the first exposed area to form a welding area, which can improve the connection stability between the electrode terminal and the electrical energy lead-out member. The welding area forms an annular structure around the liquid injection hole, which can seal the connection between the liquid injection hole and the second through hole, further reducing the risk of leakage during electrolyte being injected into the accommodating component and improving the reliability of the battery cell.

According to some embodiments of the present disclosure, the end cover assembly comprises two electrode terminals, one of which is a positive electrode terminal and the other of which is a negative electrode terminal, wherein the liquid injection hole is provided at the positive electrode terminal.

In the above technical solution, the negative charge on the casing may cause corrosion and electrolyte leakage for the casing. However, setting the liquid injection hole at the positive electrode terminal can reduce the insulation protection requirements between the liquid injection hole and the electrode terminal. Even if the electrolyte conducts the positive electrode terminal to the casing, the casing will still be positively charged, thereby reducing the risk of casing corrosion and leakage, and improving the reliability of the battery.

According to some embodiments of the present disclosure, the end cover assembly comprises two electrode terminals, and the liquid injection holes correspond one-to-one with the electrode terminals.

In the above technical solution, both electrode terminals are equipped with liquid injection holes, which can improve the liquid injection efficiency of the battery cell.

According to some embodiments of the present disclosure, the end cover assembly comprises an end cover and an electrode terminal, wherein the end cover closes the opening, the electrode terminal is disposed on the end cover and electrically connected to the electrode assembly, and the end cover is configured to support the electrode assembly.

In the above technical solution, the end cover supports the electrode assembly, which means that the end cover assembly of the battery cell can be set downwards. The accommodating component can reduce the risk of electrolyte leakage through the connection position between the end cover assembly and the casing, the connection position between the end cover and the electrode terminal, and the connection position between components such as explosion-proof valves that may be installed on the end cover and the end cover, thereby improving the reliability of the battery performance.

In the second aspect, the present disclosure provides a battery, including a battery cell as described in any one of the above solutions.

In the third aspect, the present disclosure provides an electrical equipment comprising a battery cell as described in any one of the above solutions, wherein the battery cell is used to provide electrical energy; or comprising the battery as described in any one of the above solutions, wherein the battery is used to provide electrical energy.

In the fourth aspect, the present disclosure provides a preparation method for battery cell, comprising: providing a casing, an end cover assembly, an electrode assembly, and an accommodating component; accommodating the electrode assembly within the accommodating component; accommodating the electrode assembly and the accommodating component within the casing; covering the opening of the casing by the end cover assembly; and injecting electrolyte into the accommodating component.

In the above technical solution, the electrode assembly is first installed into the accommodating component, and then the accommodating component containing the electrode assembly is installed into the casing, and the opening of the casing is closed by the end cover assembly to complete the structural assembly of the battery cell. After the structural assembly is completed, the electrolyte is finally injected into the accommodating component, so that the electrolyte is placed in the accommodating component. The accommodating component and the casing have a dual encapsulation effect on the electrolyte, thereby reducing the risk of electrolyte leakage and improving the reliability of the battery cell.

According to some embodiments of the present disclosure, the accommodating the electrode assembly within the accommodating component comprises: placing the electrode assembly into the accommodating component through the entrance of the accommodating component; and sealing the entrance.

In the above technical solution, the accommodating component is equipped with an entrance, which facilitates the installation of the electrode assembly into the accommodating component through the entrance of the accommodating component. After the electrode assembly is installed into the accommodating component, the entrance of the accommodating component is sealed, which can improve the structural sealing of the accommodating component, thereby improving the encapsulation effect of the electrolyte by the accommodating component, reducing the risk of leakage from the accommodating component, and improving the reliability of the battery.

### Brief Description of Drawings

In order to more clearly illustrate technical solutions of embodiments of the present disclosure, drawings required for use in the embodiments of the present disclosure will be described briefly below. It is obvious that the drawings in the following description are merely illustrative of some embodiments of the present disclosure. It will be understood by those of ordinary skill in the art that other drawings can also be obtained according to the drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is an exploded view of the battery cell provided in some embodiments of the present disclosure;
FIG. 4 is a partially sectional view of the part A in some embodiments shown in FIG. 3;
FIG. 5 is a sectional view of the part A in the B-B direction shown in FIG. 4;
FIG. 6 is a partially sectional view of the part A in some other embodiments shown in FIG. 3;
FIG. 7 is a sectional view of the part A in the C-C direction shown in FIG. 6;
FIG. 8 is a partially sectional view of the part A in some other embodiments shown in FIG. 3;
FIG. 9 is a sectional view of the part A in the D-D direction shown in FIG. 8;
FIG. 10 is a top view of the end cover assembly provided in some embodiments of the present disclosure;
FIG. 11 is a sectional view in E-E direction shown in FIG. 10;
FIG. 12 is a partially sectional schematic view of the connection relationship between the end cover assembly and the accommodating component provided in some embodiments of the present disclosure;
FIG. 13 is an exploded view of the battery cell provided in some other embodiments of the present disclosure; and
FIG. 14 is a flowchart schematic view of the preparation method for battery cell provided in some embodiments of the present disclosure.

In the drawings, they are not drawn to the actual scale.

Reference signs: 1000-vehicle; 100-battery; 10-box; 11-first part; 12-second part; 20-battery cell; 21-end cover assembly; 211-end cover; 212-electrode terminal; 2121-positive electrode terminal; 2122-negative electrode terminal; 2123-end face; 22-casing; 221-opening; 222-accommodating space; 23-accommodating component; 231-first wall; 232-first through hole; 24-electrode assembly; 241-main body part; 242-tab; 243-electrical energy lead-out member; 2431-first exposed area; 2432-protrusion; 24321-connection surface; 2433-second through hole; 2434-second exposed area; 25-connecting area; 26-liquid injection hole; 27-welding area; 28-pressure relief part; 200-controller; 300-motor.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium ion battery or a magnesium ion battery, etc., which is not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. Batteries can also include boxes used to encapsulate one or more battery cells or multiple battery modules. The box can prevent liquids or other foreign objects from affecting the charging or discharging of battery cells.

The battery cell includes an electrode assembly and an electrolyte, and the main body part of the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector to form the positive electrode plate. The electrode assembly also includes a positive electrode tab, which can be integrally formed with the positive electrode sheet, for example, the part of the positive electrode current collector without the positive electrode active substance layer can be directly used as the positive electrode tab, so as to input or output electrical energy from the positive electrode plate through the positive electrode tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector to form the negative electrode plate. The electrode assembly also includes a negative electrode tab, which can be integrally formed with the negative electrode sheet, for example, the part of the negative electrode current collector without the negative electrode active substance layer can be directly used as the negative electrode tab, so as to input or output electrical energy from the negative electrode plate through the negative electrode tab. The material for the negative electrode current collector can be copper, and the active substance of the negative electrode can be carbon, silicon or the like. In order to ensure that fusing does not occur under a high current, multiple positive electrode tabs can be provided and stacked together, and multiple negative electrode tabs can be provided and stacked together.

The material of the separator can be PP (polypropylene) or PE (polyethylene), etc. In addition, the electrode assembly can be of a wound structure or a laminated structure (stacked structure), which is not limited by the embodiments of the present disclosure.

The electrode assembly may also include an electrical energy lead-out member, which can be the above-mentioned tab. The electrical energy lead-out member can also be a separately set current passing component and is connected to the tab to achieve electrical energy input or output of the electrode plate.

With the continuous development of battery technology, how to improve the reliability of batteries is an urgent technical problem that needs to be solved.

For a general battery cell, the battery cell of the battery is obtained generally by assembling a positive electrode plate, a negative electrode plate, and a separator to an electrode assembly (bare cell) by means of winding or stacking, then putting the electrode assembly into a casing, covering an end cover, and finally injecting the electrolyte. The end cover of a battery cell is usually closed to the opening of the casing. In order to facilitate the assembly of the battery cell, electrode terminals are usually set on the end cover of the battery cell. The electrode terminals can be directly or indirectly connected to the tabs of the electrode assembly to achieve electrical connection between the electrode terminals and the electrode assembly. The electrode terminals serve as the output poles of the battery cell to achieve the input or output of electrical energy of the battery cell.

However, the inventor of the present disclosure has found that battery cells are prone to electrolyte leakage, and the electrolyte leakage of battery cells can have an impact on the use performance of battery cells. Moreover, when multiple battery cells form a battery, if electrolyte leakage occurs in the battery cells and there is a high voltage circuit in the local area of the battery, it is easy for the electrolyte to ignite and cause thermal runaway of the battery, seriously affecting the reliability of the battery.

The inventor analyzed the causes of electrolyte leakage in battery cells and found that the casing and end cover of the battery cell are usually welded to each other, and connected to the electrode terminals of the battery cell through a busbar component to achieve series, parallel or hybrid connection between multiple battery cells. In the later use of this structure of the battery, due to the shaking, moving or other use situation of the battery cell, the busbar component connected to the electrode terminal of the battery cell will generate a certain pulling or twisting force on the electrode terminal. As the electrode terminal is installed on the end cover, the force acting on the electrode terminal by the busbar component will be transmitted to the end cover through the electrode terminal, thereby causing a certain pulling or twisting effect on the end cover, which makes it easy for the end cover and casing to be in the phenomenon of connection failure such as weld cracking due to long-term fatigue stress, which leads to a significant risk of leakage in the battery cell. Moreover, when the electrolyte comes into contact with the casing or end cover, it is more likely to conduct the casing or end cover, thereby leading to corrosion to the casing of the battery cell and further increasing the risk of leakage. Especially when the battery cell is used upside down (i.e., the side of the battery cell with electrode terminals facing downwards in the direction of gravity), the weld seam between the top cover and the casing is located below the battery cell. If this welding interface fails, electrolyte leakage is more likely to occur, thereby seriously affecting the reliability of the battery cell and the batteries that use it.

Based on the above reasons, in order to improve the reliability of the battery, the inventor of the present disclosure has designed a battery cell, which is provided with a accommodating component inside the casing, wherein the electrode assembly is accommodated in the accommodating component, and the electrolyte is injected into the accommodating component.

In the technical solution of the present disclosure, the accommodating component can isolate the electrolyte from the casing and end cover assembly to a certain extent, and play a certain secondary sealing role for the electrolyte, thereby reducing the risk of electrolyte corrosion for the casing and end cover assembly, and reducing the risk of battery performance being affected by the failure of the connection between the casing and end cover assembly and electrolyte leakage from the connection between the casing and end cover assembly, thereby improving the reliability of battery performance.

The battery cell disclosed in the embodiments of the present disclosure can be used in, but is not limited to, electrical equipment such as vehicles, ships, or aircraft. The battery cell, battery, etc. disclosed in the present disclosure can be used to form the power supply system of the electrical equipment. In this way, it is beneficial to effectively solve problems such as electrolyte leakage of battery cells during use, so as to improve the service life and reliability of battery cells.

The embodiment of the present disclosure provides an electrical equipment using a battery as a power source, which can be but is not limited to mobile phones, tablet computers, laptops, electric toys, electric tools, electromobile, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For ease of description, the following embodiments will be described by taking an electrical equipment being a vehicle as an example.

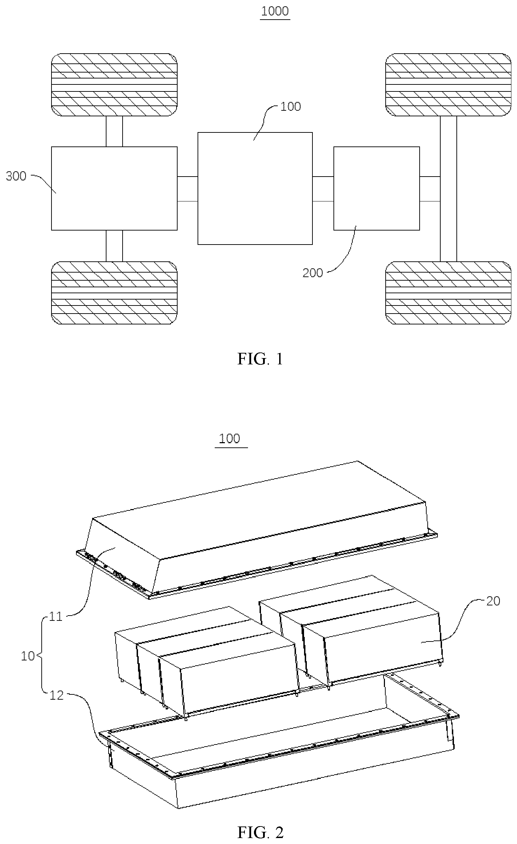

Referring to FIG. 1, FIG. 1 is a structural schematic view of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure, which can include a box 10 and the battery cell 20. The battery cell 20 is accommodated within the box 10. In the above, the box 10 is used to provide assembly space for the battery cell 20, and the box 10 can be of various structures. In some embodiments, the box 10 may include a first part 11 and a second part 12, with the first part 11 and the second part 12 covering each other. The first part 11 and the second part 12 jointly define a assembly space for accommodating the battery cell 20. The first part 11 can be in a hollow structure with an opening at one end, the second part 12 can be in a plate-shaped structure, and the second part 12 is covered on the opening side of the first part 11 to jointly define the assembly space by the first part 11 and the second part 12. The first part 11 and the second part 12 can also both be in hollow structure with an opening on one side, and the opening side of the first part 11 is covered on the opening side of the second part 12. Of course, the box 10 formed by the first part 11 and the second part 12 can be of various shapes, such as cylinder, cuboid, etc.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10.

In the above, each battery cell 20 can be a secondary battery or a primary battery; and can also be a lithium sulfur battery, sodium ion battery, or magnesium ion battery, but is not limited thereto. The battery cell 20 can be cylindrical, flat, or rectangular, or be of other shapes.

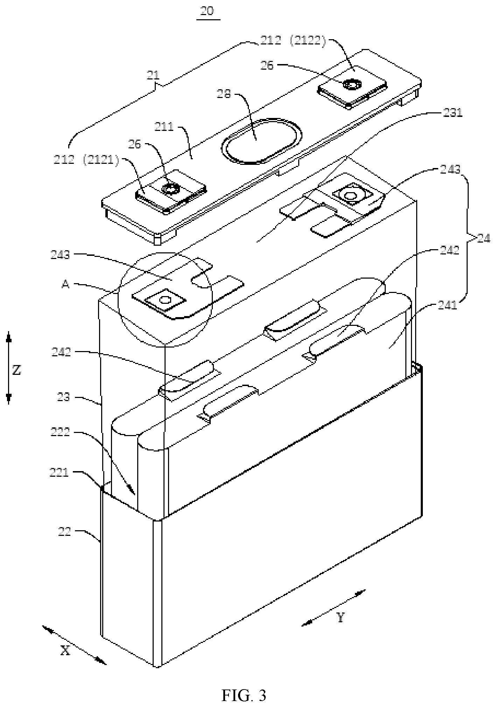

Referring to FIG. 3, FIG. 3 is an explosion view of a battery cell provided in some embodiments of the present disclosure. Some embodiments of the present disclosure provide a battery cell 20, which includes a casing 22, an end cover assembly 21, an electrode assembly 24, and an accommodating component 23. The casing 22 has an opening 221, and the end cover assembly 21 closes the opening 221 of the casing 22. The electrode assembly 24 is accommodated inside the casing 22, and the accommodating component 23 is also accommodated inside the casing 22. The accommodating component 23 is configured to accommodate the electrode assembly 24 and electrolyte.

The casing 22 provides an accommodating space 222 for components such as the electrode assembly 24, the accommodating component 23, and the electrolyte. The casing 22 and the end cover assembly 21 form a closed cavity for placing components such as the electrode assembly 24, the accommodating component 23, and the electrolyte. The casing 22 can be in various structural forms. The material of casing 22 can also be various, such as copper, iron, aluminum, steel, aluminum alloy, etc.

The end cover assembly 21 may include an end cover 211 for covering the opening 221 of the casing 22, and an electrode terminal 212 arranged on the end cover 211. The electrode terminal 212 is electrically connected to the electrode assembly 24, and serves as the output pole of the battery cell 20, which can realize the input or output of electrical energy of the battery cell 20.

In some embodiments, the end cover assembly 21 may also include a pressure relief part 28 (for releasing the internal pressure of the battery cell 20) provided on the end cover 211. Of course, in some other embodiments, the end cover assembly 21 may not include the electrode terminal 212, that is, the electrode terminal 212 may be provided on the casing 22.

The casing 22 can be of various shapes, such as cylinder, cuboid, etc. The shape of casing 22 can be determined based on the specific shape of electrode assembly 24. For example, if electrode assembly 24 is a cylindrical structure, the casing 22 can be selected as a cylindrical structure; and if the electrode assembly 24 is a cuboid structure, the casing 22 can be selected as a cuboid structure. Of course, the end cover 211 can also be of various structures, such as a plate-shaped structure or a hollow structure with an opening at one end. As an example, in FIG. 3, the casing 22 is in a cuboid structure and the end cover 211 is in a plate-shaped structure.

The electrode assembly 24 is a component in the battery cell 20 that undergoes electrochemical reactions. The main body of the electrode assembly 24 can include a positive electrode plate, a negative electrode plate, and a separator. The main body of the electrode assembly 24 can be in a wound structure formed by winding the positive electrode plate, the separator, and the negative electrode plate, or a stacked structure formed by stacking the positive electrode plate, the separator, and the negative electrode plate.

Optionally, one or multiple electrode assemblies 24 accommodated in the shell can be provided. For example, in FIG. 3, there are two electrode assemblies 24, and the two electrode assemblies 24 are stacked along their thickness direction (direction X as shown in FIG. 3), that is, the two electrode assemblies 24 are stacked along the thickness direction of the battery cell 20. Of course, in other embodiments, the electrode assemblies 24 accommodated inside the shell can also be stacked in three, four, five, or six layers.

Electrolytes can be divided into liquid electrolyte, semi-solid (gel polymer) electrolyte and solid electrolyte. In the embodiment of the present disclosure, the electrolyte is liquid electrolyte, also known as electrolyte solution.

The accommodating component 23 is located inside the casing 22, and accommodates the electrode assembly 24 and electrolyte. It can be understood that the accommodating component 23 can accommodate a portion of the structure of the electrode assembly 24, such as the main body part of the electrode assembly 24, and the tabs 242 of the electrode assembly 24, and other conductive components (hereinafter referred to as electrical energy lead-out members) used for electrical energy output or input can partially extend from the accommodating component 23 to achieve electrical energy input or output of the battery cell 20. Of course, the electrode assembly 24 can also be fully accommodated within the accommodating component 23, and the electrode terminals 212 or other conductive components can be inserted into the accommodating component 23 to connect with the electrode assembly 24.

Electrolyte can be encapsulated in the accommodating component 23 and directly in contact with the electrode assembly 24 to infiltrate the electrode assembly 24. It can be understood that electrolyte can be injected into the accommodating component 23 first and then the accommodating component 23 containing electrolyte and electrode assembly 24 is encapsulated in the casing 22. Alternatively, the accommodating component 23 containing electrode assembly 24 can be loaded into the casing 22 and covered by an end cover 211, and finally electrolyte is injected into the accommodating component 23 inside the casing 22.

There are various implementation forms of the accommodating component 23, and the accommodating component 23 can be of various shapes, such as cylinder, cuboid, etc. The shape of the accommodating component 23 can be determined based on the shape of the casing 22. For example, if the casing 22 is in a cylindrical structure, the accommodating component 23 can choose a cylindrical structure. If the casing 22 is in a rectangular structure, the accommodating component 23 can be designed as a rectangular structure. It can be understood that the accommodating component 23 can be of a rigid structure or a flexible structure (i.e., the accommodating component 23 can undergo deformation, such as deformation after injecting electrolyte or adaptive deformation according to the shape of the accommodating space 222 after being encapsulated in the casing 22 and end cover assembly 21).

In different embodiments, the material of the accommodating component 23 can also have various implementation forms. For example, when the casing 22 is made of insulating material, the accommodating component 23 can be made of insulating material or metal material. When the casing 22 is made of metal material, the accommodating component 23 can be directly made of insulating material, which can eliminate the process of separately setting insulating member or insulation layer between the accommodating component 23 and the casing 22, so as to simplify the manufacturing process of the battery cell 20, and save the internal space of the casing 22. For example, the material of the accommodating component 23 is an insulating material. In this way, the accommodating component 23 can serve as insulation and isolation, which is beneficial for improving the reliability of the battery 100.

It can be understood that there are various embodiments in which the accommodating component 23 is made of insulating material. For example, the accommodating component 23 can be made of materials such as silicone, resin, or polyimide.

In some embodiments, the material of the accommodating component 23 can comprise at least one of polypropylene and polyethylene terephthalate. The accommodating component 23 can be made of polypropylene, polyethylene terephthalate, or a mixture of polypropylene and polyethylene terephthalate (the ratio of polypropylene and polyethylene terephthalate is not uniquely limited). The accommodating component 23 made of the above materials has good deformation performance, which is easy to assemble battery cells 20, and has good tensile strength, which can more reliably contain electrolyte and improve the performance reliability of the battery 100; and in the event of thermal runaway of the battery cell 20, the accommodating components 23 can be damaged at high temperatures, which facilitates the smooth release of pressure from the battery cell 20 and also improves the performance reliability of the battery 100.

The accommodating component 23 is provided inside the casing 22 of the battery cell 20, and the electrolyte and electrode assembly 24 are accommodated together in the accommodating component. The accommodating component can isolate the electrolyte from the casing 22 and end cover assembly 21 to a certain extent, and play a certain secondary sealing role for the electrolyte, thereby reducing the risk of electrolyte corrosion for the casing 22 and end cover assembly 21, and reducing the risk of the performance of the battery 100 being affected by the failure of the connection between the casing 22 and end cover assembly 21 and electrolyte leakage from the connection between the casing 22 and end cover assembly 21, thereby improving the performance reliability of battery 100.

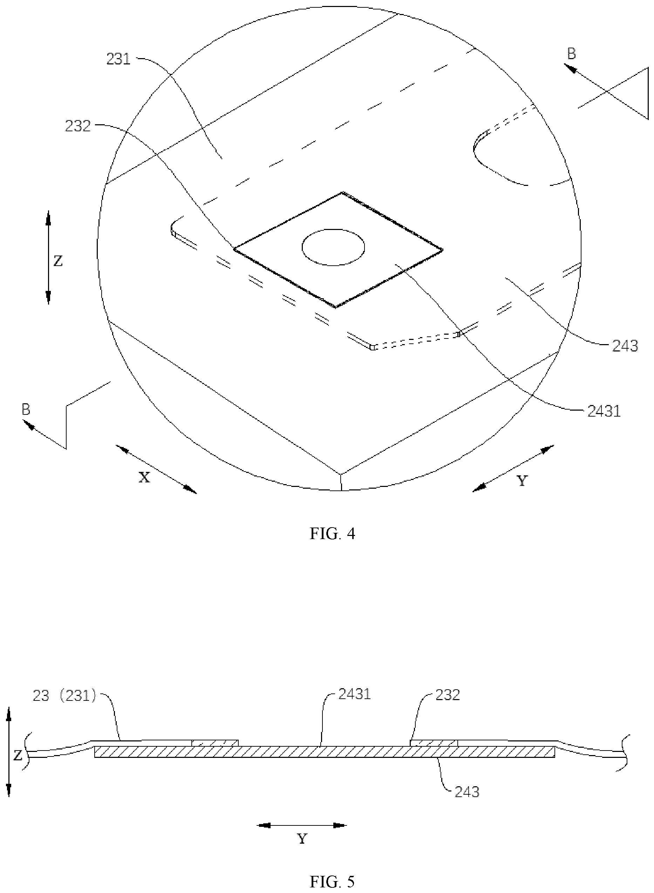

In some embodiments, referring to FIG. 3 continuously, and further referring to -FIGS. 4-5, FIG. 4 is a partially sectional view of the part A in some embodiments shown in FIG. 3; and FIG. 5 is a sectional view of the part A in the B-B direction shown in FIG. 4. The end cover assembly 21 includes an electrode terminal 212, the accommodating component 23 is provided with a first through hole 232, and the electrode assembly 24 includes an electrical energy lead-out member 243. The electrical energy lead-out member 243 is located inside the accommodating component 23, and the area of the electrical energy lead-out member 243 corresponding to the first through hole 232 forms a first exposed area 2431, which is connected to the electrode terminal 212.

As mentioned earlier, the end cover assembly 21 may include a carrier for covering the opening 221 of the casing 22 and for installing electrode terminals 212 (such as end cover 211, hereinafter referred to as end cover 211), and a structure such as an electrode terminal 212 set on the end cover 211. The end cover 211 may be a plate-shaped structure or a hollow structure with an opening 221 at one end. The end cover 211 covers the opening 221 of the casing 22 to form a closed space. The electrode terminal 212 is used for electrical connection with the electrode assembly 24. The electrode terminal 212 can serve as the output pole of the battery cell 20 to achieve the input or output of electrical energy of the battery cell 20. The material of electrode terminal 212 can also be various, such as copper, iron, aluminum, steel, aluminum alloy, etc.

As shown in FIG. 3, each battery cell 20 can be equipped with two electrode terminals 212, namely a positive electrode terminal 2121 and a negative electrode terminal 2122. The positive electrode terminal 2121 is directly or indirectly connected to the positive electrode tab of the electrode assembly 24, and the negative electrode terminal 2122 is directly or indirectly connected to the negative electrode tab of the electrode assembly 24. Both electrode terminals 212 may be located in the end cover assembly 21. Of course, in some other embodiments, the end cover assembly 21 may include only one electrode terminal 212, and another electrode terminal 212 may be provided on the casing 22.

The first through hole 232 is provided in the accommodating component 23 to communicate the interior and exterior of the accommodating component 23. The first through hole 232 can be provided at any position of the accommodating component 23, and can be any conventional shape such as circular, rectangular, or other irregular shapes.

The electrical energy lead-out member 243 plays a connecting and current passing role, which is used to connect the main body of the electrode assembly 24 and the electrode terminal 212, so as to achieve electrical connection between the main body of the electrode assembly 24 and the electrode terminal 212, and realize the input and output of electric energy of the electrode assembly 24. There are various implementation forms of the electrical energy lead-out member 243, and several feasible implementation forms of the electrical energy lead-out member 243 will be specifically given in the following text.

The electrical energy lead-out member 243 is located inside the accommodating component 23, and when viewed along the axial direction (direction X shown in the figure) of the first through hole 232, at least a portion of the electrical energy lead-out member 243 can be exposed from the first through hole 232 to form a first exposed area 2431. The electrode terminal 212 set on the end cover 211 can be connected to the first exposed area 2431 through welding, snapping, conductive adhesive bonding, etc., thereby achieving electrical connection between the electrode terminal 212 and the electrode assembly 24.

Optionally, a portion of the electrode terminal 212 can extend into the first through hole 232 and be connected to the first exposed area 2431, or at least a portion of the first exposed area 2431 can protrude from the first through hole 232 and be connected to the electrode terminal 212. Alternatively, the electrode terminal 212 and at least a portion of the first exposed area 2431 extend towards each other and are connected within the first through hole 232.

It can be understood that only one or multiple first through holes 232 can be provided, for example, based on the implementation of the end cover assembly 21 including two electrode terminals 212, the first through hole 232 can be only one, so that both electrode terminals 212 can be electrically connected to the electrode assembly 24 through the first through hole 232. Of course, two corresponding first through holes 232 can also be provided to form two independent first exposed areas 2431 at the positions where the electrical energy lead-out member 243 is connected to the two electrode terminals 212. The two electrode terminals 212 are connected in one-to-one correspondence with the two first exposed areas 2431.

The accommodating component 23 is provided with a first through hole 232, which facilitates the interconnection between the electrode terminals 212 of the end cover assembly 21 and the electrode assembly 24, thereby meeting the requirement of interconnection between the electrical energy lead-out member 243 and the electrode terminals 212. At the same time, the first through hole 232 provided on the accommodating component 23 is relatively small, thereby allowing only a part of the electrical energy lead-out member 243 to be exposed and then connected to the electrode terminal 212, thereby improving the sealing and isolation effectiveness of the accommodating component, minimizing the risk of electrolyte leakage from the accommodating component, and further improving the performance reliability of the battery 100.

It can be understood that the electrical energy lead-out member 243 can be adhered to the inner wall of the accommodating component 23 provided with the first through hole 232 or other auxiliary structures can be used to block the first through hole 232. The electrical energy lead-out member 243 can also be spaced apart from the inner wall of the accommodating component 23 provided with the first through hole 232. When the electrical energy lead-out member 243 is spaced apart from the inner wall of the accommodating component 23 with the first through hole 232, a sealing member can be installed on the inner wall of the accommodating component 23 or on the side of the electrical energy lead-out member 243 facing the inner wall of the accommodating component 23 to isolate the interior of the accommodating component 23 from the first through hole 232. Alternatively, a sealing member can be installed between the electrode terminal 212 and the first through hole 232 to isolate the interior of the accommodating component 23 from the first through hole 232, thereby improving the encapsulation effect of the accommodating component 23 on the electrolyte and reducing or even eliminating the risk of electrolyte leakage through the first through hole 232.

In some embodiments, the electrical energy lead-out member 243 seals the first through hole 232.

That is to say, the electrical energy lead-out member 243 directly blocks the first through hole 232 to reduce or even eliminate the risk of electrolyte leakage through the first through hole 232.

There are various implementation forms for the electrical energy lead-out member 243 to block the first through hole 232. For example, the electrical energy lead-out member 243 may include a surface that can completely cover the first through hole 232, which is adhered to the inner wall of the accommodating component 23 that is provided with the first through hole 232 (hereinafter referred to as the inner wall of the first wall 231). The surface of the electrical energy lead-out member 243 is used to block the first through hole 232, or a sealing member (such as a sealing ring) is provided on the outer periphery of the first through hole 232 on the surface of the electrical energy lead-out member 243, wherein the sealing member is clamped between the electrical energy lead-out member 243 and the accommodating component 23 to block the passage between the interior of the accommodating component 23 and the first through hole 232. In addition, a protruding part that can be in interference fit with the first through hole 232 can also be provided in the first exposed area 2431 of the surface, and the protruding part can be used to block the first through hole 232, thereby blocking the passage between the first through hole 232 and the interior of the accommodating component 23.

The electrical energy lead-out member 243 directly blocks the first through hole 232 to further reduce the risk of electrolyte leaked out of the accommodating component 23 from the gap between the electrical energy lead-out member 243 and the first through hole 232, improve the encapsulation effect of the electrolyte by the accommodating component 23, and thus further enhance the reliability of the battery 100.

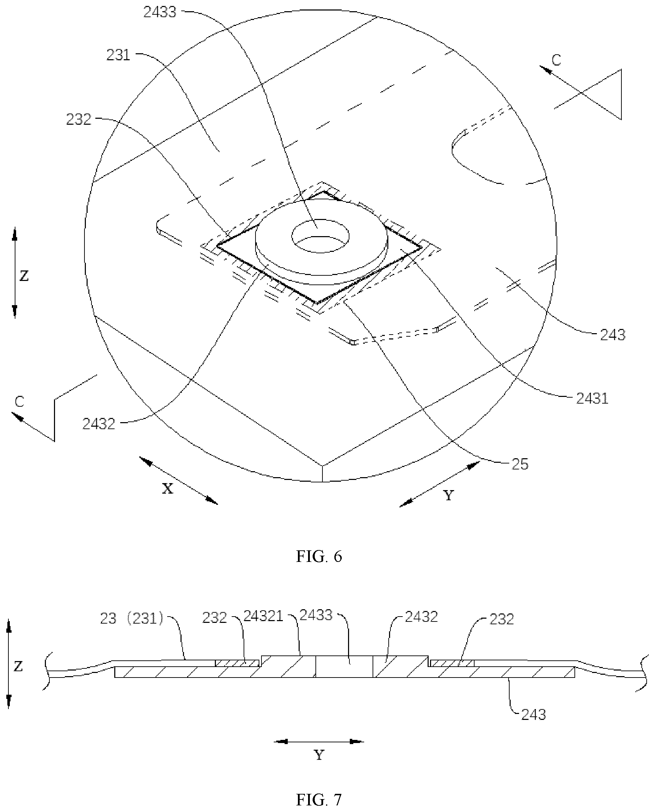

In some other embodiments, referring to FIG. 3 continuously and referring further to FIGS. 6 and 7, FIG. 6 is a partially sectional view of the part A in some other embodiments shown in FIG. 3; and FIG. 7 is a sectional view of the part A in the C-C direction shown in FIG. 6. The first exposed area 2431 has a protrusion 2432 that passes through the first through hole 232 and is connected to the electrode terminal 212.

It can be understood that the protrusion 2432 can extend beyond the outer surface of the accommodating component 23, or be flush with the outer surface of the accommodating component 23, or slightly lower than the outer surface of the accommodating component 23. For example, the protrusion 2432 can protrude from the outer surface of the accommodating component 23.

The protrusion 2432 can have a gap with the inner wall of the first through hole 232, or as mentioned earlier, the protrusion 2432 can be in an interference fit with the first through hole 232 to reduce the risk of electrolyte leakage through the gap between the protrusion 2432 and the first through hole 232.

Correspondingly, the shape of protrusion 2432 can have various implementation forms, and its cross-sectional shape can be the same as or different from that of the first through hole 232. The protrusion 2432 can be a columnar structure with the same cross-section everywhere, or an irregular structure with a cross-section that can vary freely. This embodiment of the present disclosure does not make a unique limitation on this.

For example, as shown in FIG. 6, the shape of the first through hole 232 is rectangular, and the protrusion 2432 is cylindrical.

The electrode terminal 212 can be connected to any position of the protrusion 2432. For example, along the direction perpendicular to the plane of the opening 221 of the first through hole 232, the end of the protrusion 2432 facing away from the electrical energy lead-out member 243 may have a connection surface 24321, and the electrode terminal 212 can be welded to the connection surface 24321.

A protrusion 2432 passing through the first through hole 232 is formed at the position of the first exposed area 2431, and this protrusion 2432 can limit the relative position of the accommodating component 23 and the electrical energy lead-out member 243 during the assembly of the battery cell 20, thereby facilitating grouping. The protrusion 2432 extends out of the accommodating component 23 from the first through hole 232 of the accommodating component 23, thereby facilitating the connection between the electrode terminal 212 and the electrical energy lead-out member 243. In addition, the protrusion 2432 penetrates into the first through hole 232, which can play a role in blocking the first through hole 232 or reducing the gap between the electrical energy lead-out member 243 and the first through hole 232 to some extent, thereby further reducing the risk of electrolyte leakage through the first through hole 232 and improving the reliability of the battery 100.

As mentioned earlier, there are various implementation structures for the electrical energy lead-out member 243. In some embodiments, the electrode assembly 24 includes a main body part 241 and a tab 242, with the tab 242 protruding from the main body part 241 and forming an electrical energy lead-out member 243.

Specifically, the main body part 241 of the electrode assembly 24 may include a positive electrode plate, a negative electrode plate, and a separator. The main body part 241 can be in a wound structure formed by winding the positive electrode plate, the separator, and the negative electrode plate, or a stacked structure formed by stacking the positive electrode plate, the separator, and the negative electrode plate.

The tab 242 extends from the main body part 241 and protrudes from the main body part 241. The tab 242 can be integrally formed with the main body part 241. For example, as mentioned earlier, a part without active material layer of the current collector of the electrode plate can directly form the tab 242. The electrode assembly 24 can include a positive electrode tab and a negative electrode tab, that is, the positive electrode current collector without positive electrode active material layer forms the positive electrode tab, and the negative electrode current collector without negative electrode active material layer forms the negative electrode tab.

Of course, in some other embodiments, the tabs 242 and the main body part 241 can also be separated and connected to each other through welding or other connection methods. For example, the tab 242 is integrally formed with the main body part 241, and the tab 242 directly forms the electrical energy lead-out member 243 of the electrode assembly 24 to be connected to the electrode terminal 212 of the battery cell 20.

It can be understood that the positive electrode tab of electrode assembly 24 is connected to the positive electrode terminal 2121, and the negative electrode tab is connected to the negative electrode terminal 2122.

The tab 242 of the electrode assembly 24 can be directly extended to the position of the first through hole 232 of the accommodating component 23, so that the tab 242 covers the first through hole 232 and has a first exposed area 2431 exposed through the first through hole 232, and the first exposed area 2431 of the tab 242 is directly connected to the electrode terminal 212.

In some embodiments, as shown in FIG. 3, the electrode assembly 24 further includes a main body part 241 and a tab 242. The tab 242 protrudes from the main body part 241, and an electrical energy lead-out member 243 is connected to the tab 242 to achieve electrical connection between the tab 242 and the electrode terminal 212.

That is to say, the electrical energy lead-out member 243 is a separate component for current passing and connection, which is different from the tab 242. The electrical energy lead-out member 243 connects the tab 242 and the electrode terminal 212. In practical applications, this type of electrical energy lead-out member 243 is also known as an adapter, current collector, etc.

In this embodiment, the electrical energy lead-out member 243 can be in a sheet-like structure, a folded structure, etc. The electrical energy lead-out member 243 can include a tab connecting area and an electrode terminal connecting area. The tab 242 can be connected to the tab connecting area by welding, conductive bonding, etc. The electrode terminal connecting area forms a first exposed area 2431 at the position corresponding to the first through hole 232 to connect with the electrode terminal 212.

It can be understood that based on the implementation form of the electrode assembly 24 including the positive electrode tab and the negative electrode tab, two electrical energy lead-out members 243 can also be provided, one of which is connected to the positive electrode tab and the other of which is connected to the negative electrode tab.

In some embodiments, the electrical energy lead-out member 243 is fixedly connected to the accommodating component 23.

Specifically, the electrical energy lead-out member 243 can be fixedly connected to the accommodating component 23 through methods such as bonding, welding, or snapping, so that the position of the electrical energy lead-out member 243 relative to the accommodating component 23 is relatively fixed. For example, the electrical energy lead-out member 243 can be adhered to the inner wall of the accommodating component 23 with the first through hole 232, or other wall portions of the accommodating component 23 can be provided with snapping parts, and the electrical energy lead-out member 243 can be snapped inside the accommodating component 23 through the snapping parts.

It can be understood that the electrical energy lead-out member 243 can be connected to any position of the accommodating component 23 in any conventional connection method, as long as the relative position between the electrical energy lead-out member 243 and the accommodating component 23 can be fixed.

The electrical energy lead-out member 243 is fixedly connected to the accommodating component 23, and the relative position between the electrical energy lead-out member 243 and the accommodating component 23 is fixed, thereby reducing the risk of offset of the accommodating component 23 or the electrical energy lead-out member 243, improving the fixing of the relative position of the first exposed area 2431, and improving the stability of the connection between the electrical energy lead-out member 243 and the electrode terminal 212, which is also conducive to improving the performance reliability of the battery 100.

In some embodiments, referring to FIGS. 6 and 7 continuously, the electrical energy lead-out member 243 and the accommodating component 23 are connected to form a connecting area 25, wherein the connecting area 25 is an annular structure surrounding the outer periphery of the first through hole 232.

Specifically, the electrical energy lead-out member 243 and the accommodating component 23 can be connected by bonding, welding, or other methods to form a mutually connected connecting area 25, which is located on the outer periphery of the first through hole 232 and forms an annular structure.

For example, the electrical energy lead-out member 243 and the accommodating component 23 can be bonded together through an adhesive layer. The adhesive layer can be made of an adhesive (such as hot melt adhesive, etc.) or a structure similar to double-sided tape. One surface of the double-sided tape is bonded to the accommodating component 23, and the other surface of the double-sided tape is bonded to the electrical energy lead-out member 243, thereby achieving the bonding between the electrical energy lead-out member 243 and the accommodating component 23. The area where the accommodating component 23 and the electrical energy lead-out member 243 are bonded to each other forms a connecting area 25. The electrical energy lead-out member 243 and the accommodating component 23 are bonded through an adhesive layer, which has a simple process, and few material limitations, and is convenient for the assembly operation of battery cells 20.

As shown in FIG. 6, the accommodating component 23 includes a first wall 231 provided with a first through hole 232. The inner surface of the first wall 231 is bonded to the electrical energy lead-out member 243 to form the annular connecting area 25, which surrounds the first through hole 232 to form the annular shape.

It can be understood that the connecting area 25 can extend along the direction pointing towards the center of the first through hole 232 to the edge of the first through hole 232, and the connecting area 25 can also be spaced apart from the first through hole 232.

The connecting area 25 between the electrical energy lead-out member 243 and the accommodating component 23 forms the annular structure, which is located on the outer periphery of the first through hole 232. The connecting area 25 not only fixes the relative position of the electrical energy lead-out member 243 and the accommodating component 23, but also seals the electrical energy lead-out member 243 to the accommodating component 23. The connecting area 25 can prevent electrolyte from entering the first through hole 232 through the gap between the electrical energy lead-out member 243 and the accommodating component 23 and leaking out of the accommodating component 23 from the first through hole 232, thereby further improving the sealing of the accommodating component 23 and facilitating further improvement of the performance reliability of the battery 100.

In some embodiments, referring again to FIG. 3, the end cover assembly 21 includes an end cover 211 and electrode terminals 212. The end cover 211 closes the opening 221, and the electrode terminals 212 are provided on the end cover 211. The accommodating component 23 includes a first wall 231 located between the end cover 211 and the electrode assembly 24 along the thickness direction of the end cover 211, and a first through hole 232 is provided in the first wall 231.

For example, there are two electrode terminals 212, and both electrode terminals 212 are installed on the end cover 211. The two electrode terminals 212 are respectively used for outputting or inputting the positive and negative electrodes of the battery cell 20. Specifically, two lead out holes can be provided on the end cover 211, wherein the lead out holes correspond one-to-one with the electrode terminals 212. Along the thickness direction of the end cover 211 (direction Z in FIG. 3), the lead out holes pass through the end cover 211, and the electrode terminals 212 pass through the lead out holes and are mounted on the end cover 211 to input or output electrical energy of the battery cell 20 through the electrode terminals 212. The electrode terminal 212 is insulated and installed on the end cover 211, meaning that there is no electrical connection between the electrode terminal 212 and the end cover 211.

Along the thickness direction of the end cover 211 (direction Z shown in FIG. 3), the accommodating component 23 includes a first wall 231 facing the end cover 211, which is located between the end cover 211 and the main body part 241 of the electrode assembly 24.

The first through hole 232 is provided on the first wall 231, that is to say, the first through hole 232 is provided on the wall portion on the side of the accommodating component 23 facing the end cover 211.

It can be understood that along the thickness direction of the end cover 211, the electrode terminal 212 can be set corresponding to or offset from the first through hole 232. For example, along the thickness direction of the end cover 211, the electrode terminal 212 can be set corresponding to the first through hole 232 to shorten the connection path of the electrode terminal 212.

The first through hole 232 of the accommodating component 23 is located on the first wall 231 facing the end cover 211 of the accommodating component 23, which can minimize the connection distance between the electrode terminal 212 and the electrical energy lead-out member 243, facilitate the assembly operation of the battery cell 20, and save the internal space of the casing 22, which is conducive to improving the energy density of the battery cell 20.

In some embodiments, referring to FIG. 3 continuously, the end cover assembly 21 includes two electrode terminals 212. There are two electrical energy lead-out members 243 and two first through holes 232, and both the electrical energy lead-out members 243 and the first through holes 232 correspond one-to-one with the electrode terminals 212.

As mentioned earlier, the battery cell 20 may include two electrode terminals 212, which are respectively a positive electrode terminal 2121 and a negative electrode terminal 2122. Correspondingly, there can also be two electrical energy lead-out members 243, namely the positive electrode electrical energy lead-out member and the negative electrode electrical energy lead-out member. Two first through holes 232 are provided on the accommodating component 23. The positive electrode electrical energy lead-out member includes a positive electrode first exposed area exposed from one of the first through holes 232, and the negative electrode electrical energy lead-out member includes a negative electrode first exposed area exposed from the other first through hole 232. The positive electrode terminal 2121 is connected to the positive electrode first exposed area, and the negative electrode terminal 2122 is connected to the negative electrode first exposed area.

It can be understood that based on the implementation form of "the electrode assembly 24 includes a main body part 241 and a tab 242, and the tab 242 forms an electrical energy lead-out member 243", the tab 242 includes a positive electrode tab and a negative electrode tab. The positive electrode tab has a positive electrode first exposed area and is connected to the positive electrode terminal 2121, and the negative electrode tab has a negative electrode first exposed area and is connected to the negative electrode terminal 2122.

Based on the implementation form of "the electrode assembly 24 further includes a main body part 241 and a tab 242, and the electrical energy lead-out member 243 is connected to the tab 242 and the electrode terminal 212", the positive electrode electrical energy lead-out member is connected to the positive electrode tab and includes a positive electrode first exposed area exposed from one of the first through holes 232, and the negative electrode electrical energy lead-out member 243 is connected to the negative electrode tab and includes a negative electrode first exposed area exposed from the other first through hole 232.

Two first through holes 232 are provided on the accommodating component 23, and the two first through holes 232 correspond one-to-one with the two electrical energy lead-out members 243 of the battery cell 20, which can prevent the problem of the opening being too large due to the need to reserve clearance space when one first through hole 232 is compatible with the connection of two electrical energy lead-out members 243, thereby reducing the risk of the opening of the first through hole 232 being too large and affecting the encapsulation effect of the accommodating component 23 on the electrolyte, thereby reducing the risk of electrolyte leakage and improving the performance reliability of the battery 100.

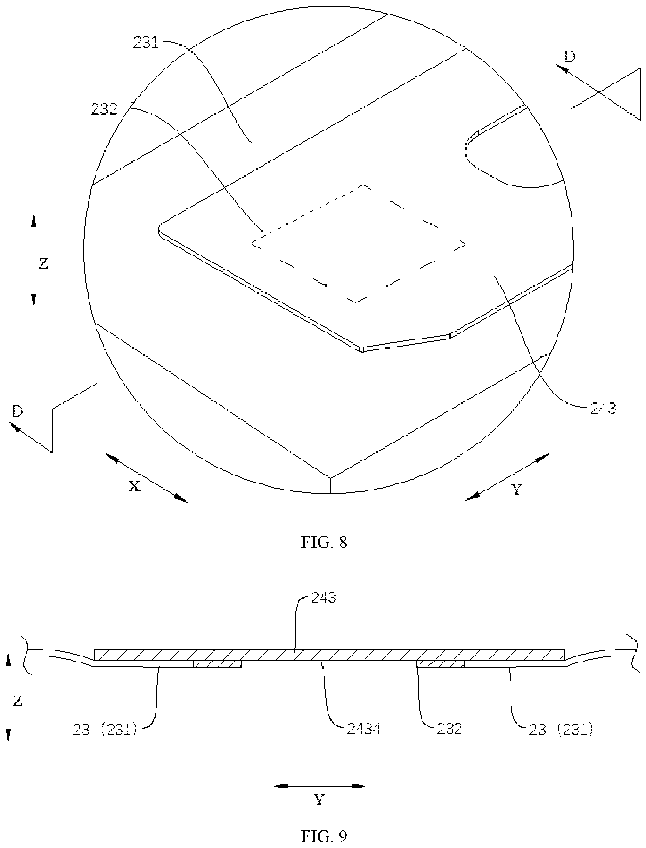

In some other embodiments, referring to FIG. 3 and referring further to FIGS. 8 and 9, FIG. 8 is a partially sectional view of the part A in some other embodiments shown in FIG. 3; and FIG. 9 is a sectional view of the part A in the D-D direction shown in FIG. 8. The end cover assembly 21 comprises an electrode terminal 212, and the electrode assembly 24 comprises a main body part 241 and an electrical energy lead-out member 243, wherein the main body part 241 is located inside the accommodating component, and the electrical energy lead-out member 243 is located outside the accommodating component 23 and connected to the electrode terminal 212, wherein the accommodating component 23 is provided with a first through hole 232, and the electrical energy lead-out member 243 covers the first through hole 232; and the electrical energy lead-out member 243 forms a second exposed area 2434 at an area corresponding to the first through hole 232, and the second exposed area 2434 is connected to the main body part 241 to achieve electrical connection between the main body part 241 and the electrode terminal 212.

That is to say, the electrical energy lead-out member 243 can be installed inside or outside the accommodating component 23. Specifically, the electrical energy lead-out member 243 located outside the accommodating component 23 may include an electrode terminal connecting area and a main body part connecting area. The electrode terminal connecting area is connected to the electrode terminal 212, and the main body part connecting area can cover the first through hole 232. From the inside of the accommodating component 23, the main body part connecting area forms a second exposed area 2434 at the area corresponding to the first through hole 232, and the second exposed area 2434 can be directly or indirectly connected to the main body part 241.

It can be understood that the electrode assembly 24 may also include a tab 242, which protrudes from the main body part 241 and connects the main body part 241 and the electrical energy lead-out member 243. Specifically, the end of the tab 242 can extend from the first through hole 232 and connect to the second exposed area 2434. Of course, the second exposed area 2434 can also have a protruding part that extends into the first through hole 232, and the protruding part can be connected to the tab 242.

Similar to the placement of the electrical energy lead-out member 243 inside the accommodating component 23, the electrical energy lead-out member 243 located outside the accommodating component can also be fixedly connected to the accommodating component 23 through bonding or other methods.

The electrical energy lead-out member 243 can be placed outside the accommodating component 23, and the main body of the electrode assembly 24 and the electrical energy lead-out member 243 can be directly or indirectly connected to each other through the first through hole 232. The electrical energy lead-out member 243 is located outside the accommodating component 23 to facilitate the connection operation between the electrical energy lead-out member 243 and the electrode terminal 212.

In some embodiments, referring to FIG. 3, the end cover assembly 21 is provided with a liquid injection hole 26, wherein the liquid injection hole 26 is communicated with the interior of the accommodating component 23.

The liquid injection hole 26 is communicated with the interior of the accommodating component 23, thereby facilitating the injection of electrolyte from the outside of the battery cell 20 into the interior of the accommodating component 23 through the liquid injection hole 26.

Based on the different end cover assemblies 21, the liquid injection hole 26 can be set at any position of the end cover assembly 21, as long as it can communicate the interior of the accommodating component 23 with the external environment of the battery cell 20, and can achieve the function of injecting liquid into the interior of the accommodating component 23.

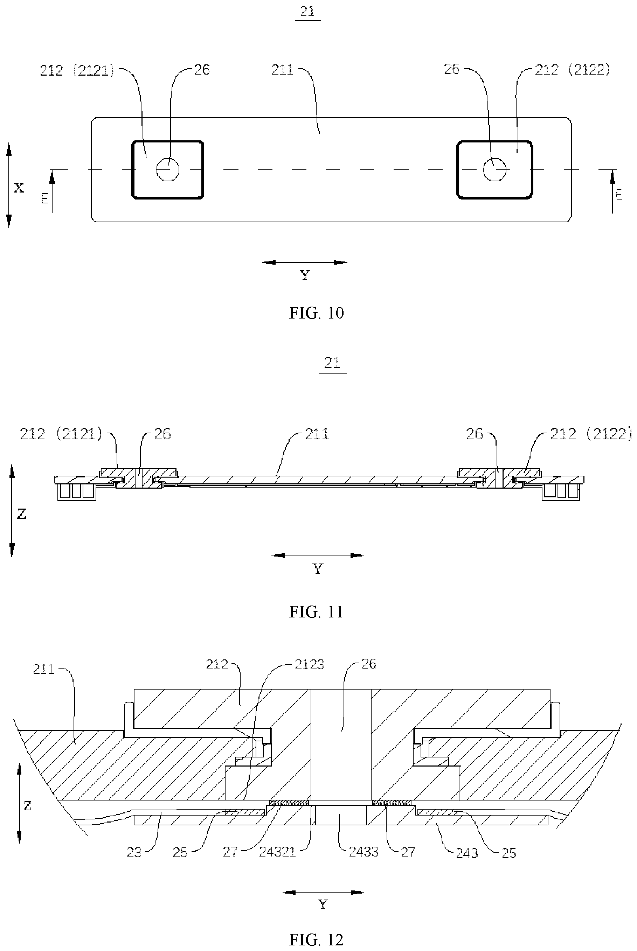

In some embodiments, referring to FIG. 3 and referring further to FIGS. 10 and 11, FIG. 10 is a top view of the end cover assembly provided in some embodiments of the present disclosure; and FIG. 11 is a sectional view in E-E direction shown in FIG. 10 The end cover assembly 21 includes an end cover 211 and an electrode terminal 212. The end cover 211 closes the opening 221, and the electrode terminal 212 is provided on the end cover 211. The electrode terminal 212 is electrically connected to the electrode assembly 24, and the liquid injection hole 26 is provided on the electrode terminal 212.

As mentioned earlier, the lead out holes can be provided on the end cover 211, wherein the lead out holes correspond one-to-one with the electrode terminals 212. Along the thickness direction of the end cover 211 (direction Z in FIG. 11), the lead out holes pass through the end cover 211, and the electrode terminals 212 pass through the lead out holes and are mounted on the end cover 211 to input or output electrical energy of the battery cell 20 through the electrode terminals 212.

The liquid injection hole 26 is provided at the electrode terminal 212, that is, the liquid injection hole 26 can penetrate any surface of the electrode terminal 212 located on the outer side of the end cover 211 and any surface located on the inner side of the end cover 211, to communicate the interior and exterior of the battery cell 20. At the same time, one end of the liquid injection hole 26 located on the inner side of the end cover 211 is communicated with the interior of the accommodating component 23, so that the liquid injection hole 26 communicates the exterior of the battery cell 20 and the interior of the accommodating component 23.

For example, the liquid injection hole 26 penetrates both ends of the electrode terminal 212 along the thickness direction (direction Z shown in FIG. 11) of the end cover 211.

It should be noted that an insulation layer can be provided on the peripheral wall of the liquid injection hole 26 to form an insulation barrier between the electrode terminal 212 and the electrolyte, serving to insulate and isolate the electrode terminal 212 from the electrolyte.

The liquid injection hole 26 is integrated into the electrode terminal 212, which can reduce the number of openings in the end cover 211 itself. At the same time, the electrode terminal 212 is connected to the electrode assembly 24, and the electrolyte in the liquid injection hole 26 can enter the accommodating component 23 through the connection position between the electrode terminal 212 and the electrolytic assembly. Compared with the structure of separately making holes on the accommodating component 23 to communicate the liquid injection hole 26 with the accommodating component 23, it can reduce the destructive processing for the accommodating component 23, improve the isolation effect of the accommodating component 23, and thus enhance the reliability of the battery 100.

Of course, in other cases, the liquid injection hole 26 can also be provided on the end cover 211 and penetrate the inner surface of the end cover 211 (the surface facing the electrode assembly 24) and the outer surface of the end cover 211 (the surface facing away from the electrode assembly 24). At the same time, a hole can be formed at a position of the accommodating component 23 corresponding to the liquid injection hole 26, and the liquid injection hole 26 can be communicated with the opening of the accommodating component 23 to enable communication between the liquid injection hole 26 and the interior of the accommodating component 23. It can be understood that pipelines can be installed on the end cover 211 or the accommodating component 23, and the liquid injection hole 26 and the opening are communicated through pipelines to reduce the possibility of electrolyte injected into the outside of the accommodating component 23 during the injection process.

In some embodiments, referring again to FIGS. 3 to 11, and further referring to FIG. 12, FIG. 12 is a partially sectional schematic view of the connection relationship between the end cover assembly and the accommodating component provided in some embodiments of the present disclosure. The accommodating component 23 is provided with a first through hole 232, and the electrode assembly 24 includes an electrical energy lead-out member 243. The electrical energy lead-out member 243 is located inside the accommodating component 23, and the area of the electrical energy lead-out member 243 corresponding to the first through hole 232 forms a first exposed area 2431, which is connected to the electrode terminal 212. The first exposed area 2431 is provided with a second through hole 2433, which communicates the liquid injection hole 26 and the interior of the accommodating component 23.

Specifically, the liquid injection hole 26 is provided at the electrode terminal 212, and at the same time, a second through hole 2433 is provided on the first exposed area 2431, wherein the second through hole 2433 communicates with the interior of the accommodating component 23. After the electrode terminal 212 is connected to the first exposed area 2431 of the electrical energy lead-out member 243, the liquid injection hole 26 inside the electrode terminal 212 can communicate with the second through hole 2433, so that the liquid injection hole 26 can communicate with the interior of the accommodating component 23 through the second through hole 2433.

It should be noted that based on the implementation form of "the first exposed area 2431 has a protrusion 2432, which passes through the first through hole 232 and is connected to the electrode terminal 212", the liquid injection hole 26 can pass through the protrusion 2432.

It can be understood that the liquid injection hole 26 and the second through hole 2433 can be directly communicated or indirectly communicated through other intermediate connecting structures.

The electrical energy lead-out member 243 has a first exposed area 2431 exposed from the first through hole 232 of the accommodating component 23, and the electrode terminal 212 is connected to the first exposed area 2431. At the same time, a second through hole 2433 is provided on the first exposed area 2431, and the liquid injection hole 26 inside the electrode terminal 212 is communicated with the second through hole 2433, which can make the liquid injection hole 26 communicate with the interior of the accommodating component 23. Its structural conformability is higher, and arranging one through hole in the accommodating component 23 can meet the two requirements of the interconnection between the electrode assembly 24 and the electrode terminal 212, and the internal communication between the liquid injection hole 26 and the accommodating component 23. It meets the functional requirements of the battery cell 20 while minimizing destructive processing on the accommodating component 23, thereby improving the integrity and sealing of the accommodating component 23, reducing the risk of electrolyte leakage from the accommodating component 23, and thus reducing the risk of electrolyte leakage from battery cell 20 and improving the reliability of battery cells 20.

In some embodiments, the liquid injection hole 26 is positioned opposite to the second through hole 2433 along the thickness direction of the end cover 211.

For example, along the thickness direction of the end cover 211 (direction Z shown in FIG. 12), the electrode terminal 212 has an end face 2123 facing the first exposed area 2431 or even directly in contact with the first exposed area 2431. One end of the liquid injection hole 26 penetrates through this end face 2123. After the electrode terminal 212 is connected to the first exposed area 2431, the end of the liquid injection hole 26 extending to the end face 2123 and the second through hole 2433 can be communicated with each other. Observing along the thickness direction of the end cover 211, the liquid injection hole 26 and the second through hole 2433 can partially or completely overlap, so that the liquid injection hole 26 and the second through hole 2433 are directly communicated.

It can be understood that the electrode terminal 212 can be directly connected to the first exposed area 2431 through the end face 2123, or connected to the first exposed area 2431 through an intermediate connector at other positions of the electrode terminal 212. For example, the end face 2123 of the electrode terminal 212 is directly connected to the first exposed area 2431.

The liquid injection hole 26 and the second through hole 2433 are directly communicated. The electrolyte flowing out from the liquid injection hole 26 can directly enter the second through hole 2433, thereby shortening the liquid injection path as much as possible and reducing the risk of leakage during the electrolyte being injected into the accommodating component 23. This is also beneficial for improving the reliability of the battery cell 20.

In some embodiments, as shown in FIG. 12, the electrode terminal 212 is welded to the first exposed area 2431 to form a welding area 27, wherein the welding area 27 is an annular structure surrounding the outer periphery of the liquid injection hole 26.

Specifically, based on the implementation form of "along the thickness direction of the end cover 211, the electrode terminal 212 has an end face 2123 facing the first exposed area 2431 or even directly in contact with the first exposed area 2431", the end face 2123 can be directly welded to the first exposed area 2431 to form a ring-shaped welding area 27 on the outer periphery of the liquid injection hole 26.

For example, as shown in FIG. 12, the first exposed area 2431 has a protrusion 2432 that passes through the first through hole 232. Along the direction perpendicular to the plane of the opening 221 of the first through hole 232, the end of the protrusion 2432 facing away from the electrical energy lead-out member 243 has a connection surface 24321, and the end surface 2123 of the electrode terminal 212 is welded to the connection surface 24321 to form a welding area 27.

Of course, it is also possible to weld the outer peripheral surface of the electrode terminal 212 intersecting with the end face 2123 and the first exposed area 2431, which can also form a ring-shaped welding area on the outer periphery of the liquid injection hole 26.

It can be understood that the welding area 27 can extend to the edge of the liquid injection hole 26 along the direction perpendicular to the axial direction of the liquid injection hole 26 (direction Z in FIG. 12), or be spaced apart from the edge of the liquid injection hole 26.

The electrode terminal 212 is welded to the first exposed area 2431 to form a welding area 27, which can improve the connection stability between the electrode terminal 212 and the electrical energy lead-out member 243. The welding area 27 forms an annular structure around the liquid injection hole 26, which can seal the communication between the liquid injection hole 26 and the second through hole 2433, thereby further reducing the risk of leakage during electrolyte being injected into the accommodating component 23 and improving the reliability of the battery cell 20.

In some embodiments, the end cover assembly 21 includes two electrode terminals 212, one of which is a positive electrode terminal 2121 and the other of which is a negative electrode terminal 2122. The liquid injection hole 26 is provided at the positive electrode terminal 2121.

The negative charge on the casing 22 may cause corrosion and electrolyte leakage for the casing 22. However, setting the liquid injection hole 26 at the positive electrode terminal 2121 can reduce the insulation protection requirements between the liquid injection hole 26 and the electrode terminal 212. Even if the electrolyte conducts the positive electrode terminal 2121 to the casing 22, the casing 22 will still be positively charged, thereby reducing the risk of corrosion and leakage of the casing 22, and improving the reliability of the battery 100.

In some embodiments, the end cover assembly 21 comprises two electrode terminals 212, and the liquid injection holes 26 correspond one-to-one with the electrode terminals 212.

That is to say, there are also two liquid injection holes 26, and one liquid injection hole 26 is provided on each electrode terminal 212. It can be understood that each liquid injection hole 26 is communicated with the interior of the accommodating component 23. Both electrode terminals 212 are equipped with liquid injection holes 26, which can improve the liquid injection efficiency of the battery cell 20.

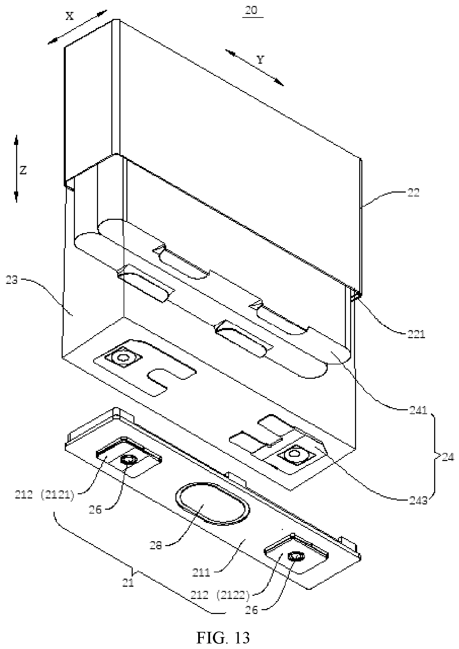

In some further embodiments, referring to FIG. 13, FIG. 13 is an exploded view of the battery cell provided in some other embodiments of the present disclosure. The end cover assembly 21 includes an end cover 211 and electrode terminals 212. The end cover 211 closes the opening 221, and the electrode terminals 212 are arranged on the end cover 211 and electrically connected to the electrode assembly 24. Along the thickness direction of the end cover 211, the end cover 211 is configured to support the electrode assembly 24.

Along the thickness direction of the end cover 211 (direction Z shown in FIG. 13), the end cover 211 is configured to support the electrode assembly 24. That is to say, the battery cell 20 can be placed upside down inside the box 10. The end of the battery cell 20 provided with the electrode terminal 212 (the end where the end cover 211 is located) is oriented towards the bottom of the box 10, or in practical applications, the end of the battery cell 20 provided with the electrode terminal 212 (the end where the end cover 211 is located) is oriented towards the ground or downwards, so that the thickness direction of the end cover 211 is the direction of gravity.

The end cover 211 supports the electrode assembly 24, which means that the end cover assembly 21 of the battery cell 20 can be set downwards. The accommodating component 23 can reduce the risk of electrolyte leakage through the connection position between the end cover assembly 21 and the casing 22, the connection position between the end cover 211 and the electrode terminal 212, and the connection position between components such as explosion-proof valves that may be installed on the end cover 211 and the end cover 211, thereby improving the performance reliability of the battery 100.

Some embodiments of the present disclosure also provide a battery 100, including a battery cell 20 as described in any of the above embodiments.

Some embodiments of the present disclosure also provide an electrical equipment, which may include a battery cell 20 as described in any of the above embodiments, wherein the battery cell 20 is used to provide electrical energy; or the electrical equipment may include the battery 100 described in the above embodiments, which is used to provide electrical energy. The electrical equipment can be any of the aforementioned devices or systems that use battery 100.

Referring to FIG. 3 to 12, some embodiments of the present disclosure provide a battery cell 20, which includes a casing 22, an end cover assembly 21, an electrode assembly 24, and a accommodating component 23. The casing 22 has an opening 221, and the end cover assembly 21 includes an end cover 211 and an electrode terminal 212 disposed on the end cover 211. The end cover 211 closes the opening 221. The electrode assembly 24 is accommodated inside the casing 22, and the accommodating component 23 is also accommodated inside the casing 22, and the accommodating component 23 is used to accommodate the electrode assembly 24 and electrolyte.

The accommodating component 23 includes a first wall 231, which is located between the end cover 211 and the electrode assembly 24 along the thickness direction of the end cover 211. A first through hole 232 is provided on the first wall 231.

The electrode assembly 24 includes a main body part 241, a tab 242, and an electrical energy lead-out member 243. The tab 242 protrudes from the main body part 241, and the electrical energy lead-out member 243 is connected to the tab 242. The main body part 241, tab 242, and electrical energy lead-out member 243 are all located inside the accommodating component 23. The area of the electrical energy lead-out member 243 corresponding to the first through hole 232 forms a first exposed area 2431. The first exposed area 2431 has a protrusion 2432 that passes through the first through hole 232 and is connected to the electrode terminal 212. The electrical energy lead-out member 243 is connected to the accommodating component 23 to form a connecting area 25, which is an annular structure surrounding the outer periphery of the first through hole 232.

The end cover assembly 21 is also provided with a liquid injection hole 26, which is located at the electrode terminal 212. The first exposed area 2431 is provided with a second through hole 2433, which communicates the liquid injection hole 26 with the interior of the accommodating component 23. The liquid injection hole 26 is positioned opposite to the second through hole 2433 along the thickness direction of the end cover 211.

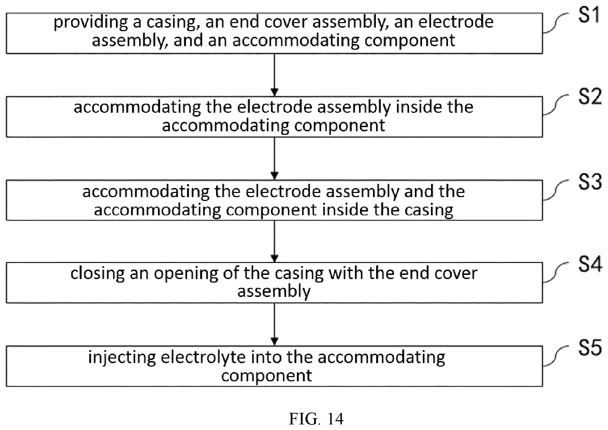

The some embodiments of the present disclosure also provide a preparation method for battery cell 20, referring to FIG. 14, FIG. 14 is a flowchart schematic view of the preparation method for battery cell provided in some embodiments of the present disclosure. The method mainly includes the following steps.

S1: providing casing 22, end cover assembly 21, electrode assembly 24, and accommodating component 23.

The casing 22 can be any of the aforementioned casings 22 used to accommodate the electrode assembly 24 and the accommodating component 23, the end cover assembly 21 can be any of the aforementioned end cover assemblies 21, the electrode assembly 24 can be any of the aforementioned electrode assemblies 24, and the accommodating component 23 can be any of the aforementioned accommodating components 23.

The casing 22, end cover assembly 21, electrode assembly 24, and accommodating component 23 can all be provided manually, or they can all be provided by automated equipment, feeding equipment, or by combination of human and machine (wherein some of the casing 22, end cover assembly 21, electrode assembly 24, and accommodating component 23 are provided manually, while the other part is supplied by equipment).

S2: accommodating the electrode assembly 24 inside the accommodating component 23.

The electrode assembly 24 can be stored in the accommodating component 23 using either manual operation mode or automatic equipment operation mode.

Alternatively, the electrode assembly 24 can be fixed to the accommodating component 23 to fix the relative position between the accommodating component 23 and the electrode assembly 24.

S3: accommodating the electrode assembly 24 and the accommodating component 23 inside the casing 22.

Specifically, the accommodating component 23 containing the electrode assembly 24 is placed into the casing 22.

S4: closing the opening 221 of the casing 22 with the end cover assembly 21.

The opening 221 of the casing 22 is closed by the end cover assembly 21, and the end cover assembly 21 and the casing 22 form a closed accommodating space 222 for accommodating the electrode assembly 24 and the accommodating component 23.

S5: injecting electrolyte into the accommodating component 23.

Specifically, electrolyte can be injected through the liquid injection hole 26 on the casing 22 or end cover assembly 21 of the battery cell 20 or into the accommodating component 23 inside the casing 22, so that the electrolyte is also contained in the accommodating component 23 and infiltrates the electrode assembly 24 contained in the accommodating component 23. Of course, the accommodating component 23 can also reserve a passage that can be communicated to the outside of the casing 22 or the end cover assembly 21 (such as a pipe that extends from the accommodating component 23 to the outside of the battery cell 20), and electrolyte is injected into the accommodating component 23 through this passage.

The accommodating component 23 and the casing 22 serve as a dual encapsulation for the electrolyte, thereby reducing the risk of electrolyte leakage and improving the reliability of the battery cell 20.

In some embodiments, accommodating the electrode assembly 24 within the accommodating component 23 mainly includes: placing the electrode assembly 24 into the accommodating component 23 through the entrance of the accommodating component 23; and sealing the entrance.

That is to say, the accommodating component 23 can reserve an entrance (not shown in the figure), through which the electrode assembly 24 can be put into the interior of the accommodating component 23 when assembling the battery cell 20. After the electrode assembly 24 is installed into the accommodating component 23, the reserved entrance of the accommodating component 23 is sealed to prevent the electrolyte injected into the interior of the accommodating component 23 from leaking out through the entrance.

It should be noted that the entrance of the accommodating component 23 can be reserved at any position that does not hinder the grouping of the accommodating component 23 and the subsequent connection of the electrode assembly 24 and the electrode terminal 212. For example, based on the implementation form of "the accommodating component 23 includes a first wall 231, and the first wall 231 is provided with a first through hole 232" mentioned above, the entrance can be arranged opposite to the first through hole 232.

The sealing of the entrance can be done using any conventional sealing method such as welding sealing, adhesive sealing, etc.

The accommodating component 23 is equipped with an entrance, which facilitates the insertion of the electrode assembly 24 into the accommodating component 23 through the entrance of the accommodating component 23. After the electrode assembly 24 is mounted into the accommodating component 23, the entrance of the accommodating component 23 is sealed, which can improve the structural sealing of the accommodating component 23, thereby enhancing the encapsulation effect of the electrolyte by the accommodating component 23, reducing the risk of leakage from the accommodating component 23, and improving the reliability of the battery 100.

It should be noted that in the absence of conflicts, the embodiments and the features in the embodiments in the present disclosure can be combined with each other.

Although the present disclosure has been described with reference to preferred embodiments, various improvements can be made thereto and components therein can be replaced with equivalents without departing from the scope of the present disclosure. Especially, as long as there is no structural conflict, the various technical features mentioned in various embodiments can be combined in any way. The present disclosure is not limited to the specific embodiments disclosed in the text, but includes all technical solutions falling within the scope of the claims.

## Claims

1. A battery cell, comprising:
a casing, having an opening;
an end cover assembly, closing the opening;
an electrode assembly, accommodated in the casing; and
an accommodating component, accommodated inside the casing, wherein the accommodating component is configured to accommodate the electrode assembly and electrolyte.

2. The battery cell according to claim 1, wherein the end cover assembly comprises an electrode terminal, the accommodating component is provided with a first through hole, and the electrode assembly comprises an electrical energy lead-out member, wherein the electrical energy lead-out member is located inside the accommodating component, and an area of the electrical energy lead-out member corresponding to the first through hole forms a first exposed area, and the first exposed area is connected to the electrode terminal.

3. The battery cell according to claim 2, wherein the electrical energy lead-out member blocks the first through hole.

4. The battery cell according to claim 2 or 3, wherein the first exposed area has a protrusion, wherein the protrusion passes through the first through hole and is connected to the electrode terminal.

5. The battery cell according to any one of claims 2-4, wherein the electrode assembly comprises a main body part and a tab, wherein the tab protrudes from the main body part and forms the electrical energy lead-out member.

6. The battery cell according to any one of claims 2-4, wherein the electrode assembly further comprises a main body part and a tab, wherein the tab protrudes from the main body part, and the electrical energy lead-out member is connected to the tab to achieve electrical connection between the tab and the electrode terminal.

7. The battery cell according to any one of claims 2-6, wherein the electrical energy lead-out member is fixedly connected to the accommodating component.

8. The battery cell according to claim 7, wherein the electrical energy lead-out member and the accommodating component are connected to form a connecting area, wherein the connecting area is an annular structure surrounding an outer periphery of the first through hole.

9. The battery cell according to claim 7 or 8, wherein the electrical energy lead-out member and the accommodating component are bonded through an adhesive layer.

10. The battery cell according to any one of claims 2-9, wherein the end cover assembly comprises an end cover and the electrode terminal, wherein the end cover closes the opening, and the electrode terminal is arranged on the end cover; and
the accommodating component comprises a first wall located between the end cover and the electrode assembly along a thickness direction of the end cover, and the first through hole is provided on the first wall.

11. The battery cell according to any one of claims 2-10, wherein the end cover assembly comprises two electrode terminals, and both the electrical energy lead-out members and the first through holes are provided in a number of two, wherein the electrical energy lead-out members and the first through holes correspond one-to-one with the electrode terminals.

12. The battery cell according to claim 1, wherein the end cover assembly comprises an electrode terminal, and the electrode assembly comprises a main body part and an electrical energy lead-out member, wherein the main body part is located inside the accommodating component, and the electrical energy lead-out member is located outside the accommodating component and connected to the electrode terminal, wherein
the accommodating component is provided with a first through hole, and the electrical energy lead-out member covers the first through hole; the electrical energy lead-out member forms a second exposed area at an area corresponding to the first through hole, and the second exposed area is connected to the main body part to achieve electrical connection between the main body part and the electrode terminal.

13. The battery cell according to any one of claims 1-12, wherein a material of the accommodating component is an insulating material.

14. The battery cell according to any one of claims 1-13, wherein a material of the accommodating component comprises at least one of polypropylene and polyethylene terephthalate.

15. The battery cell according to any one of claims 1-14, wherein the end cover assembly is provided with a liquid injection hole, wherein the liquid injection hole is communicated with an interior of the accommodating component.

16. The battery cell according to claim 15, wherein the end cover assembly comprises an end cover and an electrode terminal, wherein the end cover closes the opening, the electrode terminal is arranged on the end cover, the electrode terminal is electrically connected to the electrode assembly, and the liquid injection hole is arranged on the electrode terminal.

17. The battery cell according to claim 16, wherein the accommodating component is provided with a first through hole, and the electrode assembly comprises an electrical energy lead-out member, wherein the electrical energy lead-out member is located inside the accommodating component, and an area of the electrical energy lead-out member corresponding to the first through hole forms a first exposed area, and the first exposed area is connected to the electrode terminal; and
the first exposed area is provided with a second through hole, wherein the second through hole communicates the liquid injection hole and the interior of the accommodating component.

18. The battery cell according to claim 17, wherein the liquid injection hole is positioned opposite to the second through hole along a thickness direction of the end cover.

19. The battery cell according to claim 17 or 18, wherein the electrode terminal is welded to the first exposed area to form a welding area, wherein the welding area is an annular structure surrounding an outer periphery of the liquid injection hole.

20. The battery cell according to any one of claims 16-19, wherein the end cover assembly comprises two electrode terminals, one of which is a positive electrode terminal and the other of which is a negative electrode terminal, wherein the liquid injection hole is provided at the positive electrode terminal.

21. The battery cell according to any one of claims 16-19, wherein the end cover assembly comprises two electrode terminals, and the liquid injection holes correspond one-to-one with the electrode terminals.

22. The battery cell according to any one of claims 1-21, wherein the end cover assembly comprises an end cover and an electrode terminal, wherein the end cover closes the opening, the electrode terminal is arranged on the end cover and electrically connected to the electrode assembly, and the end cover is configured to support the electrode assembly along a thickness direction of the end cover.

23. A battery, comprising the battery cell according to any one of claims 1-22.

24. An electrical equipment, comprising the battery cell according to any one of claims 1-22, wherein the battery cell is configured to provide electrical energy; or comprising the battery according to claim 23, wherein the battery is configured to provide the electrical energy.

25. A preparation method for a battery cell, comprising:
providing a casing, an end cover assembly, an electrode assembly, and an accommodating component;
accommodating the electrode assembly inside the accommodating component;
accommodating the electrode assembly and the accommodating component inside the casing;
closing an opening of the casing with the end cover assembly; and
injecting electrolyte into the accommodating component.

26. The preparation method for the battery cell according to claim 25, wherein the accommodating the electrode assembly inside the accommodating component comprises:
placing the electrode assembly into the accommodating component through an entrance of the accommodating component; and
sealing the entrance.
